# EUROPEAN PATENT APPLICATION

(11) **EP 4 614 584 A1**
(43) Date of publication of application: **10.09.2025**
(21) Application number: 23885521.7
(22) Date of filing: 17.10.2023
(51) Int. Cl.: H01M 4/131, H01M 4/62

(54) **SLURRY COMPOSITION FOR NEGATIVE ELECTRODES FOR SECONDARY BATTERIES**

(30) Priority: 31.10.2022 JP 2022175138
(71) Applicant: MITSUBISHI PENCIL COMPANY, LIMITED, Tokyo 140-8537 (JP)
(72) Inventor: HAYAKAWA, Takayuki, Tokyo 140-8537 (JP); MATSUSHIMA, Ryosuke, Fujioka-shi, Gunma 375-8501 (JP); SAKUMA, Satoshi, Fujioka-shi, Gunma 375-8501 (JP); HASHIMOTO, Tsuyoshi, Fujioka-shi, Gunma 375-8501 (JP)
(74) Representative: Vossius & Partner Patentanwälte Rechtsanwälte mbB
(86) International application number: PCT/JP2023/037527
(87) International publication number: WO 2024/095759

(57) **Abstract**

There is provided a slurry composition for a negative electrode of a secondary battery suitable for producing a battery such as a lithium ion battery and an electrode, which has high stability and is capable of forming a negative electrode having a low resistance value when formed into an electrode, even when the slurry composition for a negative electrode of a secondary battery uses carbon nanotubes. A slurry composition for a negative electrode of a secondary battery according to the present disclosure includes at least carbon nanotubes, a conductive material, a negative electrode active material, a dispersant, and a binder component. The dispersant includes carboxymethylcellulose having a mass average molecular weight of 300000 or less or a metal salt thereof, and carboxymethylcellulose having a mass average molecular weight of 1000000 to 3000000 or a metal salt thereof.

## Description

### Technical Field

The present specification relates to a slurry composition for a negative electrode of a secondary battery, which is suitable for producing an electrode and a battery such as a lithium ion battery.

### Background Art

With the spread of electric vehicles and reduction in size and weight and improvement in performance of portable devices such as mobile phones and notebook personal computers, a secondary battery having a high energy density and an increase in capacity of the secondary battery are required. Under such backgrounds, a lithium ion secondary battery using a non-aqueous electrolytic solution has been used in many devices because of its characteristics of high energy density and high voltage, and polyvinylpyrrolidone (PVP) has been frequently used as a dispersant in the related art.
This polyvinylpyrrolidone (PVP) has disadvantages such as an increase in resistance value when added, and the resistance value can be lowered without using PVP. Thus, in recent years, carboxymethyl cellulose or the like which has little influence on the resistance value has been used.

As the composition for a negative electrode for a lithium ion secondary battery in the related art, in which carboxymethyl cellulose or the like is used, for example, the following are exemplified.
1) Patent Document 1 discloses a method for producing a lithium secondary battery including a negative electrode having a negative electrode current collector and a negative electrode mixture layer formed on the negative electrode current collector, the method including: preparing a slurry-like composition by dispersing a negative electrode active material and a binder containing at least carboxymethyl cellulose (CMC) in a solvent; applying the prepared slurry-like composition onto the negative electrode current collector to form the negative electrode mixture layer; and constructing a lithium secondary battery by using the negative electrode having the negative electrode mixture layer formed, wherein as the carboxymethyl cellulose (CMC), a low-molecular-weight region CMC having a weight average molecular weight of less than 1000000 and a high-molecular-weight region CMC having a weight average molecular weight of 3000000 or more are used in such a manner that a weight ratio (A : B) of the low-molecular-weight region CMC (A) to the high-molecular-weight region CMC (B) is in a range of 25 : 75 to 75 : 25.
2) Patent Document 2 discloses a method for producing a negative electrode plate for a non-aqueous electrolyte secondary battery, the method including a kneading step of dispersing or dissolving a negative electrode active material composed of a graphite material which occludes and releases lithium ions, a thickener, and a binding agent in water to adjust a slurry-like coating composition. In the kneading step, a first thickener having a viscosity of 10 to 1800 mPa·s in 1 wt.% aqueous solution thereof and the negative electrode active material are dispersed under the presence of water, and then a second thickener having a viscosity of 3000 to 10000 mPa.s in 1 wt.% aqueous solution thereof is further added thereto and dispersed, and then a binding agent is added thereto.
3) Patent Document 3 discloses a negative electrode plate for a non-aqueous secondary battery in which a negative electrode mixture layer is formed by allowing a negative electrode mixture coating material obtained by kneading and dispersing an active material composed of a material capable of holding at least lithium, a binding agent, and a thickener in a dispersion medium to adhere onto a negative electrode current collector. The thickener is composed of a combination of a first carboxymethyl cellulose having a low viscosity and a high degree of etherification and a second carboxymethyl cellulose having a high viscosity and a low degree of etherification (see, for example, Patent Document 3).

On the other hand, in recent years, carbon nanotubes have been used because, by using a carbon nanotube dispersion or the like as a negative electrode material used for a lithium ion secondary battery, it is possible to achieve good conductive performance, to reduce electrode resistance, and to efficiently form a conductive network with a small amount.

For example, Patent Document 4 discloses, as a negative electrode mixture slurry for a non-aqueous electrolyte secondary battery, a slurry in which surface-modified natural graphite as an active material, a carbon nanotube dispersion, carboxymethyl cellulose (CMC), and styrene-butadiene rubber (SBR) as a binder component (binding agent) are dispersed in water.

In Patent Document **1,** carboxymethyl cellulose (CMC) is used as a binder component, and CMC having a high molecular weight is used. Thus, the object and the technical idea of Patent Document 1 are different from those of the present disclosure.

In the slurry composition for a negative electrode of a secondary battery and the like using two types of carboxymethyl cellulose (CMC) used in Patent Documents 2 and 3 described above, there is still a problem in that it is difficult to achieve both the stability of the coating liquid and the conductive performance after applying in a case of containing carbon nanotubes.

In addition, although Patent Document 4 described above discloses a slurry composition for a negative electrode of a secondary battery using a carbon nanotube dispersion having specific physical properties, there are problems such as insufficient dispersion, a long time required for dispersion, and peeling at the time of electrode processing, and thus, further improvement is desired at present.

### Citation List

### Patent Document

Patent Document 1: JP 2013-89422 A (Claims, Examples, and the like)
Patent Document 2: JP 2009-99441 A (Claims, Examples, and the like)
Patent Document 3: JP 2012-59488 A (Claims, Examples, and the like)
Patent Document 4: JP 2015-195143 A (Claims, Examples, and the like)

### Summary of Invention

### Technical Problem

To solve the above problems in the related art, the present disclosure is directed to providing a slurry composition for a negative electrode of a secondary battery , which is suitable for producing a battery such as a lithium ion battery and an electrode, the slurry composition having high stability and capable of forming a negative electrode having a low resistance value when formed into an electrode, even when the slurry composition uses carbon nanotubes.

### Solution to Problem

As a result of intensive studies on the above-described problems in the related art, the present inventors have found that a slurry composition for a negative electrode of a secondary battery containing at least carbon nanotubes, a conductive material, a negative electrode active material, a dispersant, and a binder component can be obtained by using two types of carboxymethyl cellulose having specific physical properties as the dispersant, the slurry composition for a negative electrode of a secondary battery of the above-described object being suitable for producing a battery such as a lithium ion battery and an electrode, and have completed the present disclosure.

That is, the slurry composition for a negative electrode of a secondary battery of the present disclosure is a slurry composition for a negative electrode of a secondary battery containing at least carbon nanotubes, a conductive material, a negative electrode active material, a dispersant, and a binder component, in which the dispersant includes carboxymethyl cellulose having a mass average molecular weight of 300000 or less or a metal salt thereof, and carboxymethyl cellulose having a mass average molecular weight of 1000000 to 3000000 or a metal salt thereof.

The slurry composition for a negative electrode of a secondary battery preferably has a viscosity of 0.1 to 1.5 Pa·s at a shear rate of 1000 s⁻¹.

### Advantageous Effects of Invention

According to the present disclosure, it is possible to provide a slurry composition for a negative electrode of a secondary battery , which has high stability, can form a negative electrode having a low resistance value when formed into an electrode, is hardly separated even during storage over time, and is suitable for producing a battery such as the lithium ion battery and an electrode, even when the slurry composition for a negative electrode of a secondary battery uses carbon nanotubes. The object and effects of the present disclosure can be recognized and obtained especially using the components and combinations indicated in the claims. Both general explanation described above and detailed explanation described below are exemplary and explanatory and do not limit the present disclosure described in claims.

### Description of Embodiments

Hereinafter, embodiments of the present disclosure will be described in detail. Note that the technical scope of the present disclosure is not limited to the embodiment described below but includes the invention described in Claims and equivalents thereof. In addition, the present disclosure can be implemented based on the contents disclosed in the present specification and technical common knowledge (including design matters and obvious matters) in the art.

A slurry composition for a negative electrode of a secondary battery according to the present disclosure includes at least carbon nanotubes, a conductive material, a negative electrode active material, a dispersant, and a binder component, in which the dispersant comprises carboxymethylcellulose having a mass average molecular weight of 300000 or less or a metal salt thereof, and carboxymethylcellulose having a mass average molecular weight of 1000000 to 3000000 or a metal salt thereof.

### Carbon Nanotube (CNT)

The carbon nanotube (CNT) to be used in the present disclosure is not particularly limited as long as it substantially has a shape in which one sheet of graphite is wound into a cylindrical shape. And any of a single-walled CNT in which one sheet of graphite is wound into one layer and a multi-walled CNT in which one sheet of graphite is wound into two layers or three or more layers can be used.

Examples of the shape of the carbon nanotube include, but are not limited to, a graphite whisker, filamentous carbon, a graphite fiber, an ultrafine carbon tube, a carbon tube, a carbon fibril, a carbon microtube, and a carbon nanofiber, and these may be used alone or in combination of two or more (hereinafter, simply referred to as "at least one").

Furthermore, the average outer diameter of the carbon nanotubes is preferably 1 nm or more and 90 nm or less, more preferably 3 nm or more and 30 nm or less, and even more preferably 3 nm or more and 15 nm or less, from the viewpoint of the viscosity of the dispersion, conductivity, and stability.

In the present disclosure, the average outer diameter of the carbon nanotubes refers to an arithmetic average value of a sufficient number n of outer shapes measured using an image of a transmission electron microscope at a magnification of 100000 times or more.

The purity of the carbon nanotubes to be used in the present disclosure is preferably 90 to 100 mass%, and particularly preferably 95 to 100 mass%. Note that the purity of the carbon nanotubes is calculated based on an amount of an impurity which is an ash content measured in accordance with JIS K 1469 or JIS K 6218.

Specifically, as the carbon nanotube (CNT) that can be used, at least one of NC7000 (average outer diameter 10 nm) available from Nanocyl SA, BaytubesC150P (average outer diameter 11 nm) available from Bayer AG, FloTube9000 (average outer diameter 19 nm), FloTube7320 (average outer diameter 9 nm), FloTube7010 (average outer diameter 9 nm), FloTube6810 (average outer diameter 8 nm), FloTube6120 (average outer diameter 8 nm), FloTube6100 (average outer diameter 8 nm), and FloTube2020 (average outer diameter 4 nm) available from JiangSu Cnano Technology Ltd., MEIJOeDIPS EC2.0 (average outer diameter 2.0 nm) available from Meijo Nano Carbon Co., Ltd., KORBON-A7 (average outer diameter 1.2 nm) available from KORBON Co., Ltd., NFT-7 (average outer diameter 30 nm) available from Koatsu Gas Kogyo Co., Ltd., NFT-15 (average outer diameter 30 nm) available from Koatsu Gas Kogyo Co., Ltd., or the like can be used.

The content of these carbon nanotubes (CNTs) can be set to a suitable content, and is not particularly limited. Preferably, from the viewpoint of achieving both high stability and conductive performance and the viewpoint of a preferable viscosity of the coating liquid, the content thereof is preferably 0.1 to 15.0 mass%, more preferably 0.1 to 10.0 mass%, even more preferably 0.1 to 8.0 mass%, 0.1 to 6.0 mass%, and particularly preferably 0.1 to 5.0 mass%, with respect to the total amount of the slurry composition.

When the content of the carbon nanotubes (CNT) is 0.1 mass% or more, sufficient conductivity can be secured. On the other hand, when the content is 15.0 mass% or less, stability of the coating liquid and good conductivity can be secured.

### Conductive Material

Examples of the conductive material other than the carbon nanotubes (CNT) include carbon particles such as graphene, graphite, and carbon black such as acetylene black and ketjen black. These conductive materials may be used alone or in combination.

The shape of these carbon particles is not particularly limited, and may be, for example, a flat shape, an array shape, or a spherical shape.

The average particle size of these carbon particles can be 100 nm or greater, 200 nm or greater, 300 nm or greater, 500 nm or greater, 700 nm or greater, 1 µm or greater, 2 µm or greater, or 3 µm or greater, and can be 20 pm or less, 15 µm or less, 10 µm or less, or 7 µm or less. Here, the average particle size adopted in the present specification is appropriately determined depending on the size of the carbon particles of interest. In a case of particles having a particle size of less than about 1 um, the average particle size is a value of a histogram average particle size (D50) according to a scattering intensity distribution measured by a dynamic light scattering method. In a case of particles having a particle size of 1 µm or greater, the average particle size is a value of a median size (D50) calculated on a volumetric basis by laser diffractometry. The measurement by the dynamic light scattering method can be performed using, for example, DelsaMax CORE (Beckman Coulter, Inc.). The measurement by the laser diffractometry can be performed using, for example, a particle size distribution analyzer MT3300II (MicrotracBEL Corp.).

The content of each of these conductive materials can be set to a suitable content and is not particularly limited. Preferably, from the viewpoint of achieving both high stability and conductive performance and the viewpoint of a preferable viscosity of the coating liquid, the content thereof is preferably 0.1 to 15.0 mass%, more preferably 0.1 to 10.0 mass%, even more preferably 0.1 to 8.0 mass%, 0.1 to 6.0 mass%, and particularly preferably 0.1 to 5.0 mass%, with respect to the total amount of the slurry composition.

### Negative electrode active material

The negative electrode active material that can be used is not particularly limited. For example, metal oxide-based active material particles and silicon-based active material particles can be used, and particularly metal oxide-based negative electrode active material particles can be used.

As the metal oxide-based negative electrode active material particles, for example, titanium oxide can be used. The titanium oxide is not particularly limited as long as it is capable of occluding and releasing lithium. For example, spinel-type lithium titanate, ramsdellite-type lithium titanate, titanium-containing metal composite oxide, titanium dioxide having a monoclinic crystal structure (TiO₂ (B)), or anatase-type titanium dioxide can be used.

Examples of the spinel-type lithium titanate include Li₄+xTi₅O₁₂ (x varies in a range of -1 ≤ x ≤ 3 depending on a charge-discharge reaction). Examples of the ramsdellite-type lithium titanate include Li₂+yTi₃O₇ (y varies in a range of -1 ≤ y ≤ 3 depending on the charge-discharge reaction) . Examples of TiO₂ (B) and the anatase-type titanium dioxide include Li₁+zTiO₂ (z varies in a range of -1 ≤ z ≤ 0 depending on the charge-discharge reaction).

Examples of the titanium-containing metal composite oxide include metal composite oxides containing Ti and at least one element selected from the group consisting of P, V, Sn, Cu, Ni, and Fe. Examples of the metal composite oxide containing Ti and at least one element selected from the group consisting of P, V, Sn, Cu, Ni, and Fe include TiO₂-P₂O₅, TiO₂-V₂O₅, TiO₂-P₂O₅-SnO₂, and TiO₂-P₂O₅-MeO (Me is at least one element selected from the group consisting of Cu, Ni, and Fe).

Preferably, such a metal composite oxide has low crystallinity and has a microstructure in which a crystal phase and an amorphous phase coexist or an amorphous phase singly exists. With the microstructure, it is possible to further improve cycle performance.

In the slurry composition for a negative electrode of a secondary battery according to the present disclosure, the content of the negative electrode active material is preferably 30 to 60 mass%, and more preferably 35 to 55 mass%, with respect to the total amount of the slurry for a negative electrode, from the viewpoint of ensuring a battery capacity and the viewpoint of ensuring fluidity of the slurry.

### Dispersant

The dispersant to be used in the present disclosure includes (A) carboxymethyl cellulose (CMC) having a mass average molecular weight of 300000 or less or a metal salt thereof and (B) carboxymethyl cellulose (CMC) having a mass average molecular weight of 1000000 to 3000000 or a metal salt thereof. The effects of the present disclosure are exhibited for the first time by using carboxymethyl cellulose (CMC) or a metal salt thereof constituting the combination [(A) and (B)] of these physical properties in combination. Examples of the metal salt include a sodium salt, and an ammonium salt. The sodium salt is preferred.

The "mass average molecular weight" in the present disclosure can be calculated by measuring an aqueous solution by gel permeation chromatography.

As the CMC or a metal salt thereof that can be specifically used and has the mass average molecular weight of each of the above physical properties, when there is a commercially available product, it can be used. Examples of the commercially available product of (A) include CELLOGEN WS-C (mass average molecular weight 150000: sodium salt) available from DKS Co., Ltd., Daicel 1220 (mass average molecular weight 300000: sodium salt) available from Daicel Chemical Industries, Ltd., and F01MC (mass average molecular weight 200000: sodium salt) available from Nippon Paper Industries Co., Ltd., and examples of the commercially available product of (B) include F150LC (mass average molecular weight 2000000: sodium salt) available from Nippon Paper Industries Co., Ltd., and Daicel 1190 (mass average molecular weight 1800000: sodium salt) available from Daicel Chemical Industries, Ltd.

Combinations other than (A) and (B), that is, single use of (A) or (B), single use of (X) CMC having a mass average molecular weight of more than 300000 to less than 1000000 or a metal salt thereof, single use of (Y) CMC having a mass average molecular weight of more than 3000000 or a metal salt thereof, or combined use of (X), (Y), (A), and (B) may lack stability and conductive performance, which is not preferable.

Further preferably, it is desirable to use CMC or a metal salt thereof in which a mass ratio of (A) having a low mass average molecular weight and (B) having a high mass average molecular weight is 1 : 0.1 to 1 : 4, and particularly preferably 1 : 0.3 to 1 : 1.

When a dried film of the slurry composition for a negative electrode of a secondary battery using the combined use-type CMC with the combination of (A) and (B) is observed with an electron microscope (SEM), carbon nanotubes (CNTs) are entangled onto the surface of the negative electrode active material without aggregation, which will be described below in Examples and the like. It allows a slurry composition for a negative electrode of a secondary battery having a low resistance value to be obtained when formed into an electrode.

The total content of these dispersants can be set to a suitable content and is not particularly limited. Preferably, from the viewpoint of high stability and a preferable viscosity of the coating liquid, the content thereof is preferably 0.1 to 2 mass%, more preferably 0.2 to 1 mass%, and even more preferably 0.2 to 0.8 mass%, with respect to the total amount of the slurry composition.

When the content is less than 0.1 mass%, the effects of the present disclosure cannot be exhibited, and aggregation or precipitation of the active material or the conductive material occurs. On the other hand, when the content is more than 2 mass%, the viscosity becomes too high, and an electrode may not be produced, which is not preferable.

### Binder component

As the binder component, for example, various emulsion-type polymers can be used. Specific examples thereof include fluorine-based emulsion-type polymers such as polyvinylidene fluoride (PVdF) and polytetrafluoroethylene (PTFE) , elastomer-based emulsion-type polymers such as ethylene-propylene-diene copolymer (EPDM), nitrile-butadiene rubber (NBR), and styrene-butadiene rubber (SBR), and acrylic emulsion-type polymers.

Among such polymers, it is preferable to use an elastomer-based emulsion-type polymer, particularly a styrene-based elastomer-based emulsion-type polymer, particularly styrene-butadiene rubber, from the viewpoint of conductivity.

As the polymer, a natural polymer such as a polysaccharide, or a synthetic polymer can be used. Such a polymer may be used as a thickener. Examples of the polysaccharide that can be used include gum arabic, tragacanth gum, guar gum, locust bean gum, alginic acid, carrageenan, gelatin, xanthan gum, welan gum, succinoglycan, diutan gum, dextran, methyl cellulose, ethyl cellulose, hydroxyethyl cellulose, and starch glycolic acid and its salts.

Examples of the synthetic polymer that can be used include water-soluble resins such as poly (vinyl methyl ether) , poly (acrylic acid) and its salts, poly(ethylene oxide), a vinyl acetate-polyvinylpyrrolidone copolymer, a styrene-acrylic acid copolymer and its salt, and an isobutylene maleic anhydride copolymer and its salt.

Examples of the polymer that can be used include nonionic dispersants such as polyalkylene oxide, polyvinyl acetal, polyvinyl ether, chitin, chitosan, and starch. These polymers may be used as dispersing aids.

The content of each of these binder components can be set to a suitable content and is not particularly limited. Preferably, from the viewpoint of a preferable viscosity of the coating liquid and the viewpoint of electrode stability, the content thereof is preferably 0.1 to 2 mass%, more preferably 0.2 to 1 mass%, and even more preferably 0.2 to 0.8 mass%, with respect to the total amount of the slurry composition.

In the slurry composition for a negative electrode of a secondary battery of the present disclosure, water (for example, purified water, distilled water, pure water, ultrapure water, tap water, ion-exchanged water, or the like) or a water-soluble solvent can be used as the balance.

In addition to the carbon nanotubes, the conductive material, the negative electrode active material, the dispersant, and the binder component, the slurry composition for a negative electrode of a secondary battery according to the present disclosure may further contain a pH adjuster and a preservative, and may further contain a leveling agent, a solid electrolyte material, a release agent, and the like as long as the effects of the present disclosure are not impaired.

### pH adjuster

The slurry composition for a negative electrode of a secondary battery according to the present disclosure preferably has a pH of 4 to 9 from the viewpoint of corrosion of a current collector and the viewpoint of composition stability.

As the pH adjuster that can be used, at least one of ammonia, urea, monoethanolamine, diethanolamine, triethanolamine, aminomethylpropanol, an alkali metal salt of carbonic acid or phosphoric acid, such as sodium tripolyphosphate or sodium carbonate, or a hydroxide of an alkali metal, such as sodium hydroxide can be used.

Examples of the preservative that can be used include at least one of organic sulfur-based, organic nitrogen-sulfur-based, organic halogen-based, haloarylsulfone-based, iodopropargyl-based, N-haloalkylthio-based, nitrile-based, pyridine-based, 8-oxyquinoline-based, benzothiazole-based, isothiazoline-based, dithiol-based, pyridineoxide-based, nitropropane-based, organotin-based, phenol-based, quaternary ammonium salt-based, triazine-based, thiazine-based, anilide-based, adamantane-based, dithiocarbamate-based, brominated indanone-based, benzylbromacetate-based, and inorganic salt-based compounds, ethanol, isopropyl alcohol, propyl alcohol, sec-butanol, t-butanol, phenoxyethanol, benzalkonium chloride, and the like.

In addition, for example, an anionic dispersant other than the CMC can be used as necessary as long as the effects of the present disclosure are not impaired. As the anionic dispersant, an acrylic resin such as a styrene acrylic resin, a urethane-based resin, a polyester-based resin, a polyvinyl chloride resin, an epoxy-based resin, or the like can be used.

The slurry composition for a negative electrode of a secondary battery according to the present disclosure contains at least carbon nanotubes, a conductive material, a negative electrode active material, a dispersant, and a binder component, in which the dispersant includes carboxymethyl cellulose having a mass average molecular weight of 300000 or less or a metal salt thereof, and carboxymethyl cellulose having a mass average molecular weight of 1000000 to 3000000 or a metal salt thereof. For example, the carbon nanotubes, the CMC having the above-described properties, water, a water-soluble solvent, a preservative, and the like are charged, stirred and mixed, and then, dispersed using the following apparatus.

Examples of the production apparatus that can be used for dispersion processing include, but are not limited to, an ultrasonic disperser; mixers such as a disper, a homomixer, a planetary mixer, a Henschel mixer, and a planetary mixer; media dispersers such as a (high-pressure) homogenizer, a paint conditioner, colloid mills, a bead mill, a cone mill, a ball mill, a sand mill, an attritor, a pearl mill, and a CoBall mill; medialess dispersers such as a wet jet mill and a thin-film rotation high-speed mixer; and other roll mills.

From the viewpoint of stability and dispersion efficiency, as the preferable apparatus, a planetary mixer, a bead mill, or the like is preferable.

In addition, the slurry composition for a negative electrode of a secondary battery according to the present disclosure preferably has a viscosity of 0.1 to 1.5 Pa·s at a shear rate of 1000 s⁻¹, from the viewpoint of precipitation stability and the viewpoint of coatability. For preparation of this viscosity, the viscosity can be adjusted by suitably combining carboxymethyl cellulose having a mass average molecular weight of 1000000 to 3000000, a metal salt thereof, or the like.

The slurry composition for a negative electrode of a secondary battery according to the present disclosure configured as described above can uniformly distribute a conductive material and an active material when applied to form an electrode. In addition, the slurry composition has high stability and can form a negative electrode having a low resistance value when formed into an electrode.

### Examples

Herein after, the present disclosure will be described using Examples, but the present disclosure is not limited to these Examples.

Slurry compositions for a negative electrode of a secondary battery were prepared by the following preparation method using blending compositions listed in Table 1 below.

Examples 1 to 4 and Comparative Examples 1 to 3: Preparation method Carbon nanotubes, acetylene black, and graphite as conductive materials, active material particles, a binder component, two types of CMC, and water were mixed and stirred by a planetary mixer to prepare each slurry composition for a negative electrode of a secondary battery. Note that styrene-butadiene rubber as the binder was in the form of an emulsion. Viscosities at a shear rate of 0.2 s⁻¹ and a shear rate of 1000 s⁻¹, pH, a coating film resistance value, SEM observation, and separation stability were evaluated using each of the obtained slurry compositions for a negative electrode of a secondary battery of Examples 1 to 4 and Comparative Examples 1 to 3. The results are shown in Table 1 below.

### Method of measuring viscosity value

Viscosity values were measured at 25°C at a shear rate of 0.2 s⁻¹ and a shear rate of 1000 s⁻¹ using a rheometer (MCR302, Anton Paar GmbH. cone plate φ 50 mm 2°) .

### Method of measuring pH

A pH meter F72 (available from HORIBA, Ltd.) was used to measure pH at 25°C.

### Method of measuring resistance value of coating film

For the obtained slurry for an electrode, a sheet resistance body serving as evaluation of conductivity was measured by the following measurement method.

The prepared slurry was applied onto one surface of a PET film (Lumirror #100-T60, Toray Industries, Inc.) using an applicator having a clearance of 50 µm, and then dried at 80°C, and a resistance value of the obtained film was measured. The resistance value was measured as sheet resistance by using an apparatus composed of a four-point probe having a probe interval of 10 mm and a milliohm high tester 3227 (available from HIOKI

### E.E. CORPORATION).

The sheet resistance was 1.0 kΩ/□ or less, and thus it can be confirmed that the conductivity is excellent.

### Method of SEM observation

The prepared slurry for an electrode was applied onto one surface of a PET film (Lumirror #100-T60, Toray Industries, Inc.) using an applicator having a clearance of 50 µm, then dried at a temperature of 80°C, cut into a size suitable for a measuring machine, observed for a surface state, and evaluated according to the following criteria.

### Evaluation criteria:

A: No aggregate of carbon nanotubes is present and carbon nanotubes are well entangled with the active material.
B: Aggregates of carbon nanotubes are observed, but carbon nanotubes are also entangled with the active material.
C: Many aggregates of carbon nanotubes are present, and carbon nanotubes are hardly entangled with the surface of the active material.

### Method of evaluating separation stability

The prepared slurry for an electrode was put in a transparent glass bottle and left in a 25°C environment for one month, and the separation stability of the slurry for an electrode was visually observed. Evaluation was made according to the following evaluation criteria. In addition, solid contents (%) of a higher portion and a lower portion of a transparent glass bottle were calculated.

### Evaluation criteria:

A: Uniform in appearance.
B: Slight separation is observed in appearance.
C: Apparent separation or precipitation is observed in appearance.

**[Table 1]**

| (Total amount 100 mass%) | | | | | | | | |
|---|---|---|---|---|---|---|---|---|
| | | Examples | | | | Comparative Example | | |
| | | 1 | 2 | 3 | 4 | 1 | 2 | 3 |
| Active material | Oxide-based active material *1 | 45 | 45 | 45 | 47.5 | 40 | 45 | 40 |
| Conductive material A | Carbon nanotube (CNT) *2 | 0.90 | 0.90 | 0.90 | 0.95 | 0.80 | 0.90 | 0.80 |
| Conductive material B | Acetylene black *3 | 0.90 | 0.90 | | | 0.80 | 0.90 | 0.80 |
| Conductive material C | Graphite *4 | | | 0.90 | 0.95 | | | |
| Dispersant A | CMC1 *5 | 0.42 | 0.56 | 0.70 | 0.44 | | | |
| Dispersant B | CMC2 *6 | 0.26 | 0.34 | 0.43 | 0.27 | 0.40 | 0.68 | 0.40 |
| Dispersant C | CMC3 *7 | | | | | | | 0.30 |
| Dispersant D | Polyvinylpyrrolidone *8 | | | | | 0.40 | 0.45 | 0.40 |
| Binder | SBR *9 | 0.56 | 0.56 | 0.56 | 0.59 | 0.50 | 0.56 | 0.50 |
| Solvent | Water | Balance | Balance | Balance | Balance | Balance | Balance | Balance |
| Viscosity | Shear rate 0.2 s⁻¹ (Pa·s) | 31 | 112 | 119 | 60 | 20 | 88 | 400 |
| | Shear rate 1000 s⁻¹ (Pa·s) | 0.24 | 0.37 | 0.48 | 0.31 | 0.30 | 0.44 | 1.00 |
| pH | | 7.2 | 7.2 | 7.1 | 7.1 | 7.0 | 7.0 | 7.3 |
| Coating film resistance value (kΩ) | | 0.56 | 0.52 | 0.58 | 0.48 | 1.05 | 1.09 | 1.41 |
| SEM observation | | A | A | A | A | B | B | C |
| Separation stability | Evaluation | A | A | A | A | C | B | A |
| | Solid content (%) of upper portion of glass bottle after 1 month at 25°C | 47.60 | 48.10 | 48.10 | 50.10 | 40.10 | 48.20 | 41.80 |
| | Solid content (%) of lower portion of glass bottle after 1 month at 25°C | 47.90 | 48.00 | 48.30 | 50.40 | 45.20 | 48.30 | 42.40 |

| | | | | | | | | |
|---|---|---|---|---|---|---|---|---|
| *1 to *9 in Table 1 above are as described below. *1: LT-112 (available from Ishihara Sangyo Kaisha, Ltd.) *2: Carbon nanotubes (average outer diameter: 9.5 µm, available from Nanocyl SA) *3: DENKA BLACK (available from Denka Company Limited) *4: FS5 (available from East Japan Carbon Co., Ltd.) *5: CELLOGEN WS-C (mass average molecular weight 150000: available from DKS Co., Ltd.) *6: Daicel 1190 (mass average molecular weight 1170000: available from Daicel Chemical Industries, Ltd.) *7: F800HC (mass average molecular weight 5000000: available from Nippon Paper Industries Co., Ltd.) *8: PVP K30 (available from BASF) *9: S2910(E)-12-Na (available from JSR Corporation) | | | | | | | | |

As is clear from the evaluation results in Table 1 above, the slurry compositions for a negative electrode of a secondary battery of Examples 1 to 4 within the scope of the present disclosure had high stability and were able to form a negative electrode having a low resistance value when formed into an electrode, without impairing inherent properties. In contrast, the slurries for an electrode of Comparative Examples 1 to 3, which were out of the scope of the present disclosure, were not able to satisfy the above characteristics.

### Industrial Applicability

The slurry composition for a negative electrode of a secondary battery has high stability and can form a negative electrode having a low resistance value when formed into an electrode, and is particularly suitable for producing a negative electrode of a lithium ion secondary battery or the like.

## Claims

1. A slurry composition for a negative electrode of a secondary battery comprising at least carbon nanotubes, a conductive material, a negative electrode active material, a dispersant, and a binder component, wherein the dispersant comprises carboxymethylcellulose having a mass average molecular weight of 300000 or less or a metal salt thereof, and carboxymethylcellulose having a mass average molecular weight of 1000000 to 3000000 or a metal salt thereof.

2. The slurry composition for a negative electrode of a secondary battery according to claim **1,** wherein a viscosity at a shear rate of 1000 s⁻¹ is 0.1 to 1.5 Pa·s.
